# EUROPEAN PATENT APPLICATION

(11) **EP 1 696 605 A1**
(43) Date of publication of application: **30.08.2006**
(21) Application number: 05720239.2
(22) Date of filing: 08.03.2005
(51) Int. Cl.: H04L 12/28, G06F 13/00

(54) **ACCESS CONTROL SYSTEM, ACCESS CONTROL DEVICE USED FOR THE SAME, AND RESOURCE PROVIDING DEVICE**

(30) Priority: 10.03.2004 JP 2004067004
(71) Applicant: MATSUSHITA ELECTRIC INDUSTRIAL CO., LTD., Kadoma-shi, Osaka 571-8501 (JP)
(72) Inventor: LEICHSENRING, Germano., c/o Matsushita El.Ind.CO L, Osaka-shi, Osaka 540-6319 (JP); KANAMARU, Tomokazu., c/o Matsushita Eö.Ind.CO.Ltd, Osaka-shi, Osaka 540-6319 (JP); OASHI, Masahiro., c/o Matsushita El.In.CO.Ltd IP, Osaka-shi, Osaka 540-6319 (JP)
(74) Representative: Gassner, Wolfgang
(86) International application number: PCT/JP2005/003967
(87) International publication number: WO 2005/088909

(57) **Abstract**

Has an object of discarding an access permission to be discarded quickly and preventing illegal use of a device providing resources. A communication unit 101 communicates with a resource use device 30 and a resource providing device 20. An access permission unit 106 instructs the resource providing device 20 to permit an access from the resource use device 30. A storage unit 103 stores information on the resource use device permitted to access as management information. The existence check unit 107 checks a communication state with the resource use device 30, the management information of which is stored in the storage unit 103. The access discard unit 108 instructs the resource providing device 20 to reject an access from the resource use device 30, communication with which is determined to be disconnected by the existence check unit 107.

## Description

### TECHNICAL FIELD

The present invention relates to an access control system for controlling a temporary access between electronic devices, an access control device used for the same, and a resource providing device used for the access control system and providing a resource to another electronic device.

### BACKGROUND ART

Recently, an increasing number of multi-user electronic devices have been produced, and a plurality of users can now simultaneously use one same device. For example, a user A can access a device owned by the user A using a terminal, and another user B can also access the device owned by the user A.

In the case where a user lends a device to another individual via a network, security is the most important issue. For example, in the case where a device is physically lent, the users transfer the device hand to hand, so that the users can manage who will use the device. However, in the case where an access is permitted to an electronic device storing a resource (hereinafter, referred to as a "resource providing device") from another electronic device (hereinafter, referred to as a "resource use device") via a network such that the resource use device can use a function of the resource providing use device, there is a possibility that the resource providing device is illegally accessed by a third party without the knowledge of the owner of the resource providing device.

Non-patent document 1 describes a protocol for solving this problem (hereinafter, referred to as a "UPnP (Universal Plug and Play) security"). The UPnP security is a general-purpose protocol for allowing a control-side electronic device (hereinafter, referred to as an "access control device"), for controlling the use of a resource by a resource use device, to control a resource providing device via a network. Use of the UPnP security allows accesses from the resource use device to the resource providing device to be controlled.

The UPnP security also can set conditions for discarding an access permission issued during access control. Specifically, a validity period can be set for the access permission issued. This can prevent an access outside the validity period.

However, with the UPnP security, an unnecessary access permission cannot be quickly discarded unless a validity period is set when the access permission is given. An unnecessary access permission should be discarded, and the duration from the time when the access permission comes to a state to be discarded until the access permission is actually discarded should be as close as possible to zero.

Patent document 1 describes a communication system for controlling an access by a plurality of electronic devices each having a wireless communication function. An access control device for permitting an access from a group of electronic devices defined in patent document 1 prohibits an access from all the electronic devices in the group when the existence of one of the electronic devices cannot be confirmed.
Patent document 1: Japanese Laid-Open Patent Publication No. 2003-289307
Non-patent document 1: UPnP Device Security and Security Console V, online, 2003, UPnP Forum, Internet URL: HYPERLINK <http://www.upnp.org/standardizeddcps/security.asp>

### DISCLOSURE OF THE INVENTION

### PROBLEMS TO BE SOLVED BY THE INVENTION

The conventional communication system described in patent document 1 stops the use of all the electronic devices belonging to the group when the existence of even one electronic device cannot be confirmed. This may limit an access even from an electronic device belonging to the group, the existence of which can be confirmed, and does not discard the access permission of only the electronic device, the access permission given to which should be discarded.

Therefore, an obj ect of the present invention for solving the above-described problems is to provide an access control system capable of quickly discarding an access permission which should be discarded and thus preventing illegal use of a device providing resource, and an access control device and a resource providing device used for the same.

### SOLUTION TO THE PROBLEMS

The present invention is directed to an access control device for controlling an access from a resource use device to a resource providing device for using a resource provided by the resource providing device. The access control device comprises a communication unit for communicating with the resource use device and the resource providing device; an access permission unit for instructing the resource providing device via the communication unit to permit an access from the resource use device; a storage unit for storing information on the resource use device which has been permitted to access by the access permission unit as management information; an existence check unit for checking a communication state with the resource use device, the management information of which is stored in the storage unit, via the communication unit; and an access discard unit for instructing the resource providing device via the communication unit to reject an access from the resource use device, communication with which is determined to be disconnected by the existence check unit.

According to the present invention, when communication with the resource use device is disconnected, the access control device instructs the resource providing device to reject an access from the resource use device. Thus, an illegal access from the resource use device to the resource providing device, an access permission given to which should be discarded, can be prevented.

Preferably, the access discard unit deletes the information on the resource use device, communication with which is determined to be disconnected, from the storage unit. Thus, unnecessary information does not remain in the access control device.

For example, the information on the resource use device may be information for identifying the resource use device, or may include information for identifying the resource use device and information for identifying the resource providing device for accepting an access from the resource use device. In the case where the information on the resource use device includes information for identifying the resource providing device, the resource providing device to be accessed by resource use device can be quickly specified.

The information on the resource use device may include information on a command issued by the resource use device when accessing the resource providing device. Thus, even when there are a plurality of resources usable by the resource use device, the types of commands can be precisely controlled.

The access permission unit may notify the resource providing device of the information on the resource use device to be permitted to access, via the communication unit. Thus, the resource providing device can quickly specify the resource use device which should be permitted to access.

The access discard unit may notify the resource providing device of the information on the resource use device, communication with which is determined to be disconnected, via the communication unit. Thus, the resource providing device can quickly specify the resource use device, an access from which should be rejected.

The access control device may further comprise an existence check response unit for responding to the resource providing device via the communication unit when receiving a communication state check request from the resource providing device via the communication unit. Thus, the resource providing device is allowed to grasp a communication state between the access control device and the resource providing device.

The communication unit may communicate with the resource use device via wireless communication; and a communication range by the wireless communication may be limited to a predetermined range. Thus, only when the access control device and the resource use device are within a predetermined range, the resource use device can use the resource of the resource providing device. Therefore, the confidentiality of the system can be further improved.

The present invention is also directed to a resource providing device for accepting an access from a resource use device permitted to access by an access control device and providing a resource. The resource providing device comprises a communication unit for communicating with the access control device and the resource use device; a storage unit for storing information on the resource use device intended by an instruction given by the access control device via the communication unit as management information; an access permission unit for permitting an access from the resource use device, the management information of which is stored in the storage unit; an existence check unit for checking a communication state with the access control device via the communication unit; and an access rejection unit for rejecting an access from the resource use device permitted to access by the access control device, communication with which is determined to be disconnected by the existence check unit.

Accordingly, when communication with the access control device is disconnected, the resource providing device rejects an access from the resource use device permitted to access by the access control device. Thus, an access from the resource use device, an access permission given to which should possibly be discarded, to the resource providing device can be eliminated.

Preferably, the access rejecting unit deletes the information on the resource use device permitted to access by the access control device, communication with which is determined to be disconnected, from the storage unit. Thus, unnecessary information does not remain in the resource providing device.

For example, the information on the resource use device may be information for identifying the resource use device, or may include information for identifying the resource use device and information for identifying the access control device which has permitted the resource use device to access. In the case where the information on the resource use device includes the information for specifying the access control device, the access control device which has permitted the resource use device to access can be quickly specified.

The information on the resource use device may include information on a command issued by the resource use device when accessing the resource providing device.

When instructed by the access control device via the communication unit to reject an access from the resource use device, the access rejecting unit may reject an access from the resource use device intended by the instruction. Thus, unless the access control device permits an access, the rejection to an access from the resource use device can be quickly started.

Preferably, the access rejecting unit deletes the information on the resource use device intended by the instruction from the storage unit.

The communication unit may communicate with the access control device via wireless communication; and a communication range by the wireless communication may be limited to a predetermined range.

The present invention is also directed to an access control system comprising a resource providing device for providing a resource; a resource use device for accessing the resource; and an access control device for controlling an access by the resource use device. The access control device includes a communication unit for communicating with the resource use device and the resource providing device; an access permission unit for instructing the resource providing device via the communication unit to permit an access from the resource use device; a storage unit for storing information on the resource use device permitted to access by the access permission unit as management information; an existence check unit for checking a communication state with the resource use device, the management information of which is stored in the storage unit, via the communication unit; and an access discard unit for instructing the resource providing device via the communication unit to reject an access from the resource use device, communication with which is determined to be disconnected by the existence check unit. The resource providing device includes a resource providing communication unit for communicating with the access control device and the resource use device; a resource providing storing unit for storing information on the resource use device intended by the instruction given by the access control device via the resource providing communication unit as management information; a resource access permission unit for permitting an access from the resource use device, the management information of which is stored in the resource providing storage unit; a resource providing existence check unit for checking a communication state with the access control device via the resource providing communication unit; and an access rejection unit for rejecting an access from the resource use device permitted to access by the access control device, communication with which is determined to be disconnected by the resource providing existence check unit, and an access from the resource use device intended by the instruction given by the access control device via the resource providing communication unit.

### EFFECT OF THE INVENTION

The present invention provides an access control system capable of quickly discarding an access permission which should be discarded and thus preventing illegal use of a device providing resource, and an access control device and a resource use device used for the same.

### BRIEF DESCRIPTION OF THE DRAWINGS

[FIG. 1] FIG. 1 shows an exemplary overall structure of an access control system according to one embodiment of the present invention.
[FIG. 2] FIG. 2 shows an exemplary structure of a pe rmissioninformation management table 104 used for access control processing.
[FIG. 3] FIG. 3 shows an exemplary structure of an access management table 204 used for resource access control processing.
[FIG. 4] FIG. 4 is a block diagram showing a structure of an access control device 10.
[FIG. 5] FIG. 4 shows an exemplary data structure of an access permission instruction, an access permission notification instruction, a completion notification, and an access permission discard instruction.
[FIG. 6] FIG. 6 is a block diagram showing a structure of a resource providing device 20.
[FIG. 7] FIG. 7 is a block diagram showing a structure of a resource use device 30.
[FIG. 8] FIG. 8 is a sequence diagram showing an example of a flow of access control performed by the access control device 10.
[FIG. 9] FIG. 9 is a sequence diagram showing an example of a flow of resource access control performed by the resource providing device 20.
[FIG. 10] FIG. 10 is a flowchart showing an operation of an access permission unit 106, an existence check unit 107, and an access discard unit 108 of the access control device 10.
[FIG. 11] FIG. 11 is a flowchart showing an operation of an existence check response unit 105 of the access control device 10.
[FIG. 12] FIG. 12 is a flowchart showing an operation of the resource providing device 20.
[FIG. 13] FIG. 13 is a flowchart showing an operation of an access discard unit 207 of the resource providing device 20.
[FIG. 14] FIG. 14 is a flowchart showing an operation of the resource use device 30.

### BEST MODE FOR CARRYING OUT THE INVENTION

Hereinafter, the present invention will be described by way of embodiments with reference to the drawings.

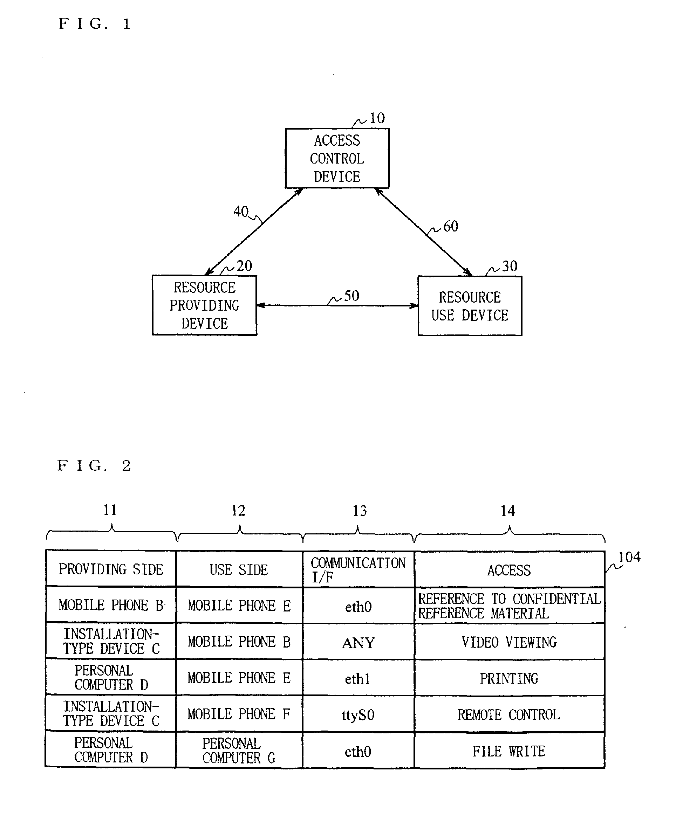

FIG. 1 shows an exemplary overall structure of an access control system according to one embodiment of the present invention. As shown in FIG. 1, the access control system includes an access control device 10, a resource providing device 20, and a resource use device 30. The access control device 10, the resource providing device 20 and the resource use device 30 are electronic devices each having a communication function and existing independently. Hereinafter, when it is not necessary to distinguish the access control device 10, the resource providing device 20 and the resource use device 30, these devices will be collectively referred to as "electronic devices".

The access control device 10 and the resource providing device 20 are communicably connected to each other via a connection 40. The resource providing device 20 and the resource use device 30 are communicably connected to each other via a connection 50. The resource use device 30 and the access control device 10 are communicably connected to each other via a connection 60. The connections 40 through 60 are communication paths for connecting the electronic devices. The connections 40 through 60 may be, for example, connections via a network such as the Internet, a wireless connection, or a connection using a wired communication path such as a network cable or the like.

In FIG. 1, one access control device 10, one resource providing device 20 and one resource use device 30 are provided. Alternatively, two or more access control devices 10, two or more resource providing devices 20, and two or more resource use devices 30 may be provided.

The access control device 10 communicates with the resource providing device 20 to control an access to resources stored in the resource providing device 20 from the resource use device 30. Hereinafter, processing performed by the access control device 10 for controlling an access from the resource use device 30 will be referred to as "access control processing". The access control device 10 transmits signals to, and receives signals from, the resource use device 30 at a predetermined time interval to check the existence of the resource use device 30. Herein, the expression "check the existence" means to check if a device with which communication is to be made (in this example, the resource use device 30) is communicable. When the existence of a resource use device 30 cannot be confirmed, i.e., when the communication with the resource use device 30 is disconnected, the access control device 10 instructs the resource providing device 20 to reject an access from the resource use device 30, the existence of which cannot be confirmed.

The resource providing device 20 permits or rejects an access from the resource use device 30 in accordance with an instruction from the access control device 10. The resource providing device 20 also communicates with the access control device 10 to control an access from the resource use device 30. Hereinafter,processing performed by the resource providing device 20 for controlling an access from the resource use device 30 will be referred to as "resource access control processing". Specifically, the resourceprovidingdevice 20 checks the existence of the access control device 10 at a predetermined time interval. When the existence of the access control device 10 cannot be confirmed, the resource providing device 20 rejects an access from the resource use device 30, the access from which is permitted by the access control device 10.

The resource use device 30 temporarily accesses the resource providing device 20 to use a resource of the resource providing device 20. Herein, the expression "use a resource" means that the resource use device 30 access the resource providing device 20 and uses a part of, or the entirety of, the functions of the access providing device 20. For example, the resource use device 30 accesses data stored in the resource providing device 20, or inputs data to, or outputs data from, a device implemented by the resource providing device 20.

As described above, one significant feature of the access control system according to this embodiment is that the access control device 10 monitors the resource use device 30 and the resource providing device 20 monitors the access control device 10, so as to prevent a third party from illegally accessing the resource providing device 20 using the resource use device 30.

FIG. 2 shows an exemplary structure of a permission information management table 104 used for access control processing. The access control device 10 controls an access from the resource use device 30 based on the permission information management table 104 stored in the access control device 10.

In the permission information management table 104, information on the resource use device 30 which has been permitted to access by the access control device 10 is recoded as management information. The management information includes a device ID of the resource providing device 20 (a providing side 11), a device ID of the resource use device 30 (a use side 12), information on a communication interface (a communication I/F 13), and information on contents of access (an access 14).

In the providing side 11, the device ID for identifying the resource providing device 20 is recorded. The device ID may be any information which can uniquely specify the resource providing device 20. The device ID is, for example, an IP address or a MAC address of the resource providing device 20, a public key of the resource providing device 20, or a Hash value of the public key of the resource providing device 20. In the following example, the device ID of the resource providing device 20 is an IP address thereof.

In the use side 12, the device ID for identifying the resource use device 30 is recorded. The device ID may be any information which can uniquely specify the resource use device 30. The device ID is, for example, an IP address or a MAC address of the resource use device 30, a public key of the resource use device 30, or a Hash value of the public key of the resource use device 30.

In the interface I/F 13, information on a communication interface used by the access control device 10 for checking the existence of the resource use device 30 is recorded. For example, "eth0" indicates that the communication uses a wired cable using the Ethernet (registered trademark), and "eth1" indicates that the communication is wireless communication using, for example, Bluetooth (registered trademark). "ttySO" indicates that the communication uses serial connection, and "ANY" indicates that the communication uses a communication interface of the access control device 10. For example, in the case where the distance between two points in communication using an IP network can be calculated with a logical unit of "HOP", the communication I/F 13 may be restricted as, for example, within 1HOP.

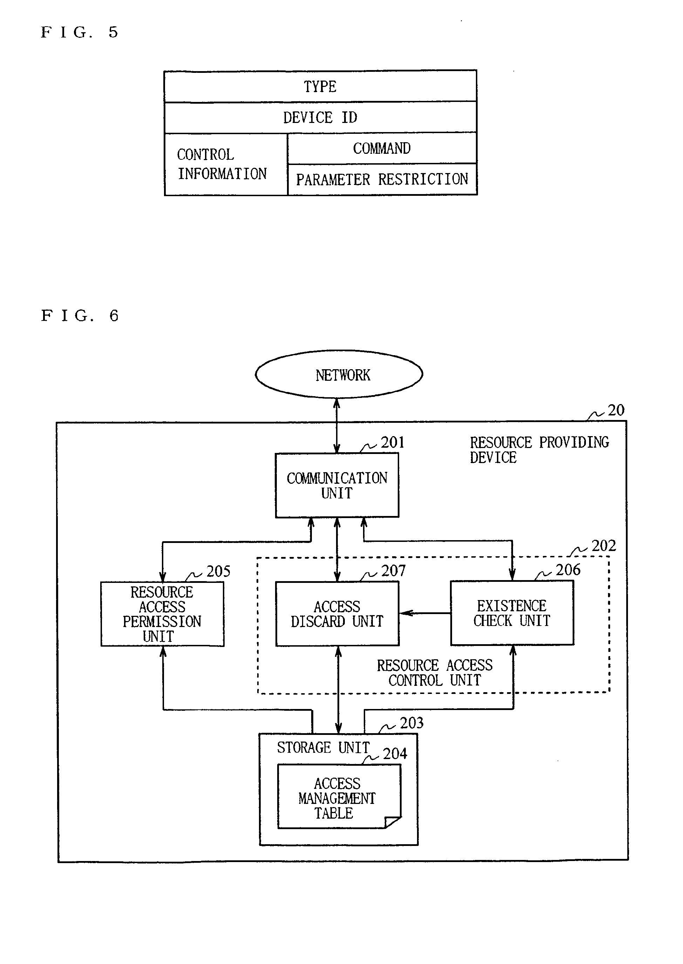

In the access 14, information on a resource to be accessed by the resource use device 30, among the resources stored in the resource providing device 20, is recorded. Specifically, a command usable by the resource use device 30 and information regarding a parameter for the command (hereinafter, referred to as a "parameter restriction") are recorded in the access 14. In the example shown in FIG. 6, functions realized by a combination of a command and information regarding a parameter restriction are shown for better understanding.

For example, when the access permitted to the resource use device 30 is "reference to confidential reference material", a command for reading and displaying a file and information on a directory which allows only a particular user to refer to the file therebelow are recorded in the access 14 as information regarding the parameter restriction. When the access permitted to the resource use device 30 is "video viewing", a command for reading and displaying a video-related file and information on a directory storing video-related files are recorded in the access 14 as information regarding the parameter restriction. When the access permitted to the resource use device 30 is "printing", a command necessary for the resource use device 30 to request the resource providing device 20 to print is recorded in the access 14. When the access permitted to the resource use device 30 is "remote control ", a command necessary for the resource use device 30 to remote-control the resource providing device 20 is recorded in the access 14. When the access permitted to the resource use device 30 is "file write", a command necessary for the resource use device 30 to write data in a file managed by the resource providing device 20 is recorded in the access 14.

The access control device 10 performs access control processing as follows based on the permission information management table 104 described above. First, the access control device 10 adds one line to the permission information management table 104 when giving an access permission to the resource use device 30. The access control device 10 also checks the existence of the resource use device 30 recorded in each line of the use side 12 at a predetermined time interval. When the existence of a resource use device 30 cannot be confirmed, the access control device 10 instructs the resource providing device 20 to reject an access from the resource use device 30, the existence of which cannot be confirmed, and deletes the information on the resource use device 30, the existence of which cannot be confirmed, i.e., the relevant line in the permission information management table 104.

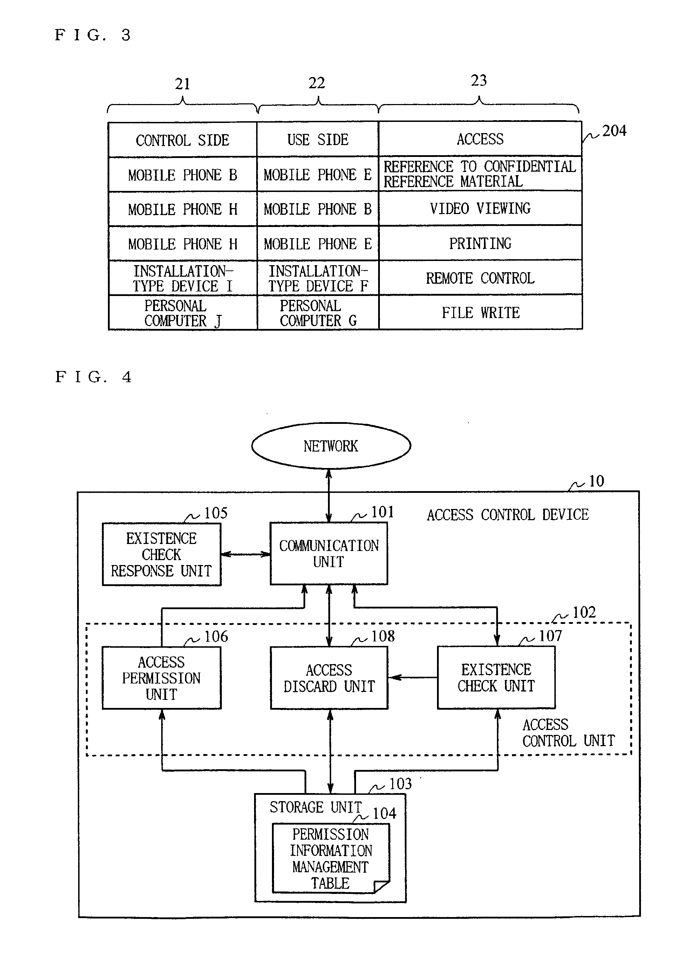

FIG. 3 shows an exemplary structure of an access management table 204 used for resource access control processing. The resource providing device 20 controls an access from the resource use device 30 based on the access management table 204 stored in the resource providing device 20.

In the access management table 204, a device ID for identifying the resource use device 30 (a use side 22) and a content of the resource to be used by the use side 22 (an access 23) are recorded in association with a device ID for identifying the access control device 10 (a control side 21).

In the control side 21, a device ID for identifying the access control device 10 which has issued an access permission instruction is recorded. An access permission instruction is for giving an access permission from the resource use device 30 to the resource providing device 20. The device ID recorded in the control side 21 may be any information which can uniquely specify the access control device 10. The device ID is, for example, an IP address or a MAC address of the access control device 10, a public key of the access control device 10, or a Hash value of the public key of the access control device 10.

In the control side 22, a device ID for identifying the resource use device 30 which is to be controlled by the control side 21 is recorded. The device ID may be any information which can uniquely specify the resource use device 30. The device ID is, for example, an IP address or a MAC address of the resource use device 30, a public key of the resource use device 30, or a Hash value of the public key of the resource use device 30.

In the access 23, information on the resource to be accessed by the resource use device 30, among the resources stored in the resource providing device 20, is recorded. Specifically, a command usable by the resource use device 30 and information regarding a parameter for the command are recorded in the access 14. Upon receiving a command from the resource use device 30, the resource providing device 20 refers to the access management table 204 to determine whether or not to permit an access from the resource use device 30 based on the access 23 corresponding to the use side 22.

Next, a structure of the access control device 10, the resource providing device 20, and the resource use device 30 will be described in detail.

FIG. 4 is a block diagram showing a structure of the access control device 10. The access control device 10 includes a storage unit 103, an access control unit 102, and a communication unit 101. The storage unit 103 stores the permission information management table 104 therein.

The access control unit 102 includes an access permission unit 106, an access discard unit 108, and an existence check unit 107.

The access permission unit 106 receives information on the resource use device 30 which is to access the resource providing device 20 from an input unit (not shown) of the access control device 10, and records the information in the permission information management table 104. The information on the resource use device 30 may be input by the user via the input unit of the access control device 10, or may be transmitted from the access use device 30. Alternatively, information on the resource use device 30 may be stored in the storage unit 103 of the access control device 10 beforehand, and relevant information may be selected and input.

The access permission unit 106 instructs the resource providing device 20 to permit an access from the resource use device 30 stored in the permission information management table 104. Specifically, the access permission unit 106 generates an access permission instruction and transfers the instruction to the communication unit 101.

FIG. 5 shows an exemplary data structure of the access permission instruction. In FIG. 5, the access permission instruction includes a type, a device ID, and at leas one piece of control information.

The type is information for specifying that the instruction is an access permission instruction, and is, for example, a constant. The device ID is information for specifying the resource use device 30. The device ID may be any information which can uniquely specify the resource use device 30. The device ID is, for example, an IP address or a MAC address of the resource use device 30, a public key of the resource use device 30, or a Hash value of the public key of the resource use device 30.

The control information includes a name of a command used for access control and zero or more parameter restriction (s) for the command. The parameter restriction is information representing an argument of the command and a range influenced by the command (for example, directory).

Returning to FIG. 4, the access permission unit 106 receives a signal notifying that an access from the resource use device 30 is now acceptable (hereinafter, referred to as a "completion notification") from the resource providing device 20 via the communication unit 101, and notifies the resource use device 30 that the access to the resource providing device 20 is now permitted. Specifically, the access permission unit 106 generates an access permission notification instruction and transfers the instruction to the communication unit 101. The access permission notification instruction has substantially the same data structure as that shown in FIG. 5 and will be described with reference to FIG. 5. As the type shown in FIG. 5, a constant indicating that the instruction is an access permission notification instruction is recorded. As the device ID, the device ID of the resource use device 30 is recorded. As the command of the control information, a name of a command which can be issued from the resource use device 30 is recorded. As the parameter restriction, an argument of the command and a range influenced by the command (for example, directory) are recorded.

The existence check unit 107 determines whether or not the resource use device 30 recorded in the permission information management table 104 exists in the network. Specifically, the existence check unit 107 generates an existence check instruction and transfers the instruction to the communication unit 101. The existence check unit 107 then receives a response transmitted from the resource use device 30 via the communication unit 101 and thus confirms the existence of the resource use device 30. When the existence of the resource use device 30 cannot be confirmed, i.e., when the response from the resource use device 30 is not received, the existence check unit 206 notifies the access discard unit 207 of the device ID of the resource use device 30.

There is no specific limitation on the method for checking the existence of the communication device with which the communication is to be made. For example, a program for diagnosing TCP/IP network such as Ping (Packet INternet Groper) can be used. With this program, when an IP address of the communication device with which the communication is to be made is designated, data is transmitted using ICMP (Internet Control Message Protocol) to check whether or not a response is made from such a communication device.

When being notified of the device ID from the existence check unit 107, the access discard unit 108 discards the access permission issued to the resource use device 30 having the notified device ID, and instructs the resource providing device 20 to reject an access from the resource use device 30. Specifically, the access discard unit 108 generates an access permission discard instruction and transfers the instruction to the communication unit 101. The access permission discard instruction has substantially the same data structure as that shown in FIG. 5 and will be described with reference to FIG. 5. As the type shown in FIG. 5, a constant indicating that the instruction is an access permission discard instruction is recorded. As the device ID, the device ID of the resource use device 30 is recorded. As the command of the control information, a name of a command which can be issued from the resource use device 30 is recorded. As the parameter restriction, an argument of the command and a range influenced by the command (for example, directory) are recorded.

Returning to FIG. 4, the access discard unit 108 refers to the permission information management table 104 to delete the information on the resource use device 30 having the device ID recorded in the access permission discard instruction.

An existence check response unit 105 receives an existence check instruction from another electronic device (in this example, the resource providing device 20) via the communication unit 101, and generates a response and transfers the response to the communication unit 101.

The communication unit 101 is an interface with the network, and transfers an instruction received from the network to the existence check unit 107. The communication unit 101 receives an instruction to be transmitted from the access permission unit 106, the access discard unit 108 and the existence check unit 107, and transmits the instruction to the network.

FIG. 6 is a block diagram showing a structure of the resource providing device 20. The resource providing device 20 includes a storage unit 203, a resource access control unit 202, a communication unit 201, and a resource access permission unit 205. The storage unit 203 stores the access management table 204 therein.

The resource access permission unit 205 receives an access permission instruction transmitted from the access control device 10 via the communication unit 201, reads the information recorded in the access permission instruction and records the information in the access management table 204. For example, when the device ID recorded in the access permission instruction is an IP address, the resource access permission unit 205 records the device ID and information on the command and the parameter restriction recorded in the access permission instruction in the access management table 204 in association with the ID address of the access control device 10. When the device ID recorded in the access permission instruction is information other than an IP address, the resource access permission unit 205 may search for an IP address corresponding to the device ID, and record the information, regarding the command and the parameter restriction recorded in the access permission instruction, in the access 23 in the access management table 204 in association with the IP address. The resource access permission unit 205 also performs setting for communication with the resource use device 30. When the setting is completed, the resource access permission unit 205 generates a completion notification to be transmitted to the access control device 10 and transfers the completion notification to the communication unit 201.

The completion notification has substantially the same data structure as that shown in FIG. 5 and will be described with reference to FIG. 5. As the type shown in FIG. 5, a constant indicating that the instruction is a completion notification is recorded. As the device ID, the device ID of the resource use device 30 is recorded. As the command of the control information, a name of a command which can be issued from the resource use device 30 is recorded. As the parameter restriction, an argument of the command and a range influenced by the command (for example, directory) are recorded.

Returning to FIG. 6, the resource access permission unit 205 receives an access instruction from the resource use device 30 for accessing a resource stored in the resource providing device 20, and determines whether or not to permit an access from the resource use device 30. Specifically, upon receiving an access instruction transmitted from the resource use device 30 via the communication unit 201, the resource access permission unit 205 refers to the access management table 204 to determine whether or not information on the resource use device 30, which is the source of the access instruction, is recorded. When the information on the resource use device 30 as the source is recorded in the access management table 204, the resource access permission unit 205 permits an access. When the information on the resource use device 30 as the source is not recorded in the access management table 204, the resource access permission unit 205 rejects an access.

The resource access control unit 202 includes an access discard unit 207 and an existence check unit 206. The resource access control unit 202 controls an access from the resource use device 30 to a resource stored in the resource providing device 20.

The existence check unit 206 determines whether or not the access control device 10 recorded in the access management table 204 exists in the network. Specifically, the existence check unit 206 generates an existence check instruction and transfers the instruction to the communication unit 201. The existence check unit 206 then receives a response transmitted from the access control device 10 via the communication unit 201 and thus confirms the existence of the access control device 10. When the existence of the access control device 10 cannot be confirmed, i.e., when the response from the access control device 10 is not received, the existence check unit 206 notifies the access discard unit 207 of the device ID of the access control device 10.

When being notified of the device ID from the existence check unit 206, the access discard unit 207 refers to the access control table 204 to delete the information on the access control device 10 having the notified device ID. When instructed to reject an access from the resource use device 30, the access discard unit 207 rejects an access from the resource use device 30. Specifically, upon receiving an access permission discard instruction transmitted from the access control device 10 via the communication unit 201, the access discard unit 207 refers to the access control table 204 to delete information on the resource use device 30 having the device ID recorded in the access permission discard instruction.

The communication unit 201 is an interface with the network, and transfers an instruction received from the network to the existence check unit 206, the access discard unit, or the resource access permission unit 205. Upon receiving a response from the existence check instruction, the communication unit 201 transfers the response to the existence check unit 206. Upon receiving an access permission discard instruction, the communication unit 201 transfers the access permission discard instruction to the access discard unit 207. Upon receiving an access instruction, the communication unit 201 transfers the access instruction to the resource access permission unit 205. Upon receiving an instruction to be transmitted from the access discard unit 207 or the existence check unit 205, the communication unit 101 transmits the instruction to the network.

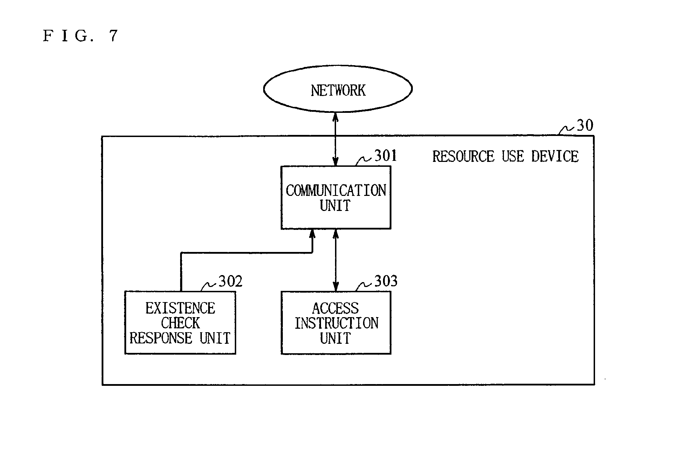

FIG. 7 is a block diagram showing a structure of the resource use device 30. The resource use device 30 includes a communication unit 301, an existence check response unit 302, and an access instruction unit 303.

The communication unit 301 is an interface with the network. The communication unit 301 transfers a message received from the network to the existence check response unit 302 or the access instruction unit 303. Upon receiving an existence check instruction, the communication unit 301 transfers the existence check instruction to the existence check response unit 302. Upon receiving an instruction to be transmitted from the existence check response unit 302 or the access instruction unit 303, the communication unit 301 transmits the instruction to the network.

The existence check response unit 302 receives an existence check instruction from another electronic device (in this example, the access control device 10) via the communication unit 301, and generates a response signal to respond to the instruction and transfers the response signal to the communication unit 301.

The access instruction unit 303 receives an access permission notification instruction transmitted from the access control device 10 via the communication unit 301, and generates an access instruction for performing desired processing on the resource providing device 20 and transfers the instruction to the communication unit 301. Thus, the resource use device 30 is allowed to use the function of the resource providing device 20. The access instruction includes the device ID of the resource use device 30 and control information. The control information includes a name of a command, and information regarding the parameter restriction which indicates an argument of the command and a range influenced by the command (for example, directory). When an IP address is used as the device ID, the device ID does not need to be recorded in the access instruction.

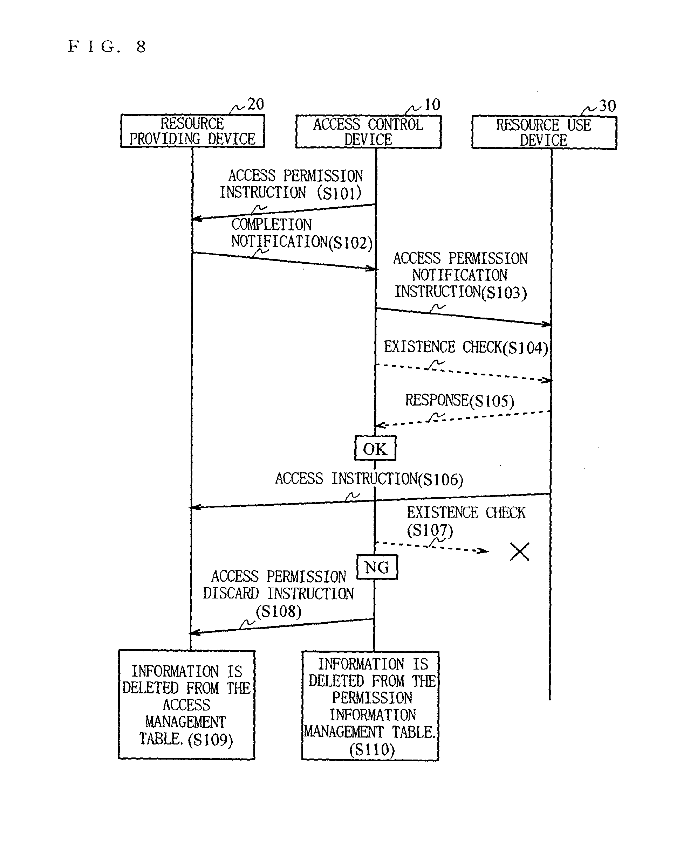

FIG. 8 is a sequence diagram showing an example of a flow of access control performed by the access control device 10.

In order to control the use of the resource by the resource use device 30, the access control device 10 and the resource providing device 20 make a preparation. For example, the access control device 10 and the resource providing device 20 establish a mutually communicable state via a communication path (in this example, connection 40). For this, any known method is usable. For example, each device automatically may recognize that the device is connected to the network and obtain information necessary for the connection including such as an IP address or the like using the UPnP technology described in non-patent document 1, and then a mutually communicable state may be established. The user may directly input information necessary for the connection via an input unit (not shown) of each device. Referring to FIG. 2, the sequence will be described with an assumption that the preparation is already made and the resource providing device 20 has authenticated an instruction from the access control device 10 and recognizes that an access from the resource use device 30 is permitted.

The access control device 10 first records information on the resource use device 30, which will temporarily use the resource providing device 20, in the permission information management table 104. As in the case of establishing the connection between the access control device 10 and the resource providing device 20, the UPnP technology may be used to obtain information necessary for the connection between the access control device 10 and the resource use device 30. Alternatively, the user may directly input information necessary for the connection.

The access control device 10 generates an access permission instruction and transmits the instruction to the resource providing device 20 (step S101). The resource providing device 20 records necessary information, from the information recorded in the received access permission instruction, in the access management table 204, and performs setting for communicating with the resource use device 30. When the setting is completed, the resource providing device 20 generates a completion notification and transmits the completion notification to the access control device 10 (step S102).

Upon receiving the completion notification, the access control device 10 generates an access permission notification instruction and transmits the instruction to the resource use device 30 (step S103).

After transmitting the access permission instruction, the access control device 10 checks the existence of the resource use device 30 at a predetermined time interval (step S104). When the existence of the resource use device 30 can be confirmed (step S105), the access control device 10 does not generate an access discard instruction.

After steps S101 and S102, the resource use device 30 generates an access instruction for accessing the access providing device 20 storing a resource, an access to which needs to be controlled, and transmits the instruction to the resource providing device 20 (step S106). Upon receiving the access instruction, the resource providing device 20 refers to the access management table 204 to determine whether or not to permit an access. Specifically, the resource providing device 20 determines whether or not the command and the device ID recorded in the received access instruction match the command and the device ID recorded in the access management table 204. Only when the commands and the device IDs match each other, the resource providing device 20 permits an access. Thus, processing in accordance with the command is executed, and the resource use device 30 is allowed to use the resource.

The access control device 10 continues checking the existence of the resource use device 30 at a predetermined time interval. When the existence of the resource use device 30 cannot be confirmed (step S107), the access control device 10 determines that the access permission instruction issued to the resource providing device 20 should be discarded.

Then, the access control device 10 generates an access permission discard instruction and transmits the instruction to the resource providing device 20 (step S108). Upon receiving the access permission discard instruction, the resource providing device 20 refers to the access management table 204 to delete the information on the resource use device 30 (step S109). After this, even if an access instruction is transmitted from the resource use device 30, the information on which has been deleted from the access management table 204, the resource providing device 20 does not accept the access instruction. The reason is that the command and the device ID recorded in the transmitted access instruction are not recorded in the access management table 204. The resource providing device 20 rejects an access from the resource use device 30, the information on which is not recorded in the access management table 204. Therefore, the resource use device 30 cannot use the resource.

The access control device 10 also deletes the information on the resource use device 30 having the device ID notified to the resource providing device 20 from the permission information management table 104 (step S110).

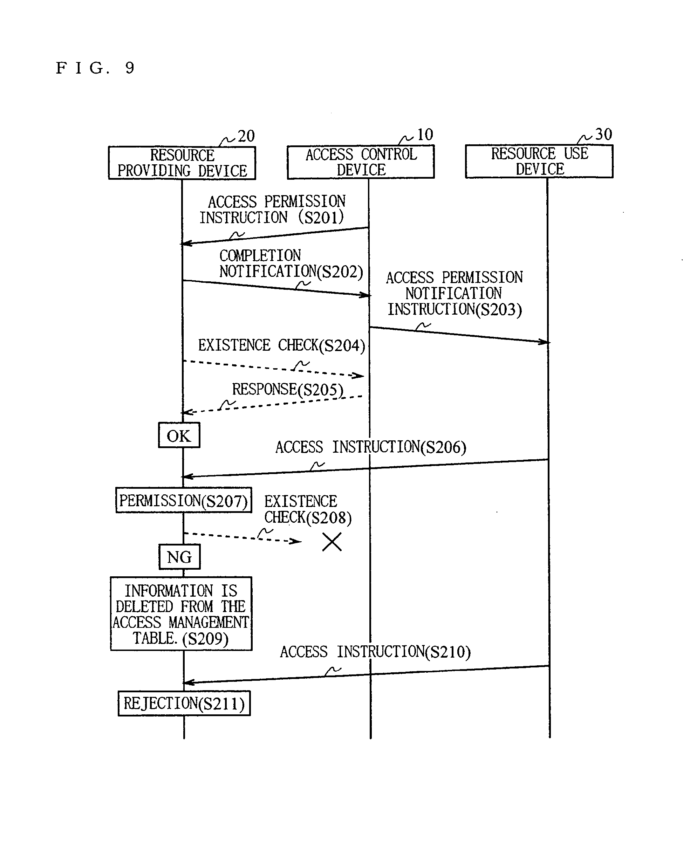

FIG. 9 is a sequence diagram showing an example of a flow of resource access control performed by the resource providing device 20.

Upon receiving an access permission instruction from the access control device 10 (step S201), the resource providing device 20 performs predetermined processing and then transmits a completion notification. Then, the access control device 10 transmits an access permission notification instruction to the resource use device 30 (step 203).

The resource providing device 20 checks the existence of the access control device 10 at a predetermined time interval (step S204). When the existence of the access control device 10 can be confirmed (step S205), upon receiving an access instruction transmitted from the resource use device 30 (step S206), the resource providing device 20 permits an access from the resource use device 30 (step S207).

By contrast, when the existence of the access control device 10 cannot be confirmed (step S208), the resource providing device 20 deletes the information on the access control device 10 from the access management table 204 (step S209). Thus, when an access is requested from the resource use device 30, the information of which has been deleted from the access management table 204 (step S210), the resource providing device 20 rejects the access (step S211).

It may be set that when the resource providing device 20 rejects an access from the resource use device 30, the resource providing device 20 transmits an error code representing the reason why the access failed to the resource use device 30.

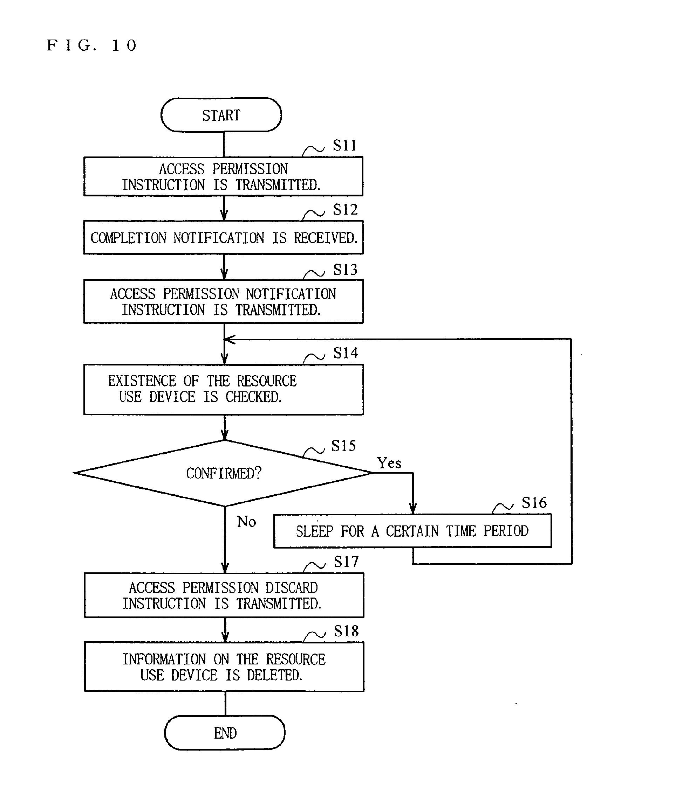

FIG. 10 is a flowchart showing an operation of the access permission unit 106, the existence check unit 107, and the access discard unit 108 of the access control device 10.

First, in the access control device 10, the access permission unit 106 records information necessary for access control in the permission information management table 104. The information recorded in the permission information management table 104 is, for example, information regarding the resource providing device 20 (corresponding to the providing side shown in FIG. 2), information regarding the resource use device 30 (corresponding to the use side shown in FIG. 2), the communication I/F between the access control device 10 and the resource use device 30 (corresponding to the communication I/F 13 shown in FIG. 2), and information regarding what access from the resource use device 30 is permitted by the resource providing device 20 (information which corresponds to the access 14 shown in FIG. 2 and is acceptable by the resource providing device 20 from the resource use device 30 (write instructions, read instructions, desirable execution instructions, etc.) and a range covered by the instructions (information regarding a parameter restriction such as directory information)).

The access permission unit 106 generates an access permission instruction and transfers the instruction to the communication unit 101. The access permission instruction is transmitted to the resource providing device 20 via the communication unit 101 (step S11).

Upon receiving a completion notification from the communication unit 101 (step S12), the access permission unit 106 generates an access permission notification instruction and transfers the instruction to the communication unit 101. The access permission notification instruction is transmitted to the resource use device 30 via the communication unit 101 (step S13) .

Next, the existence check unit 107 checks the existence of the resource use device 30 (step S14). The existence check unit 107 generates an existence check instruction and transfers the instruction to the communication unit 101. The existence check unit 107 determines whether or not the existence of the resource use device 30 has been confirmed (step S15). The existence check unit 107 determines whether or not a response has been received from the resource use device 30. The communication unit 101 transfers the response transmitted from the resource use device 30 to the existence check unit 107.

When the existence of the resource use device 30 can be confirmed in step S15, i.e., a response has been received from the resource use device 30, the existence check unit 107 sleeps for a certain time period (step S14). After sleeping for the certain time period, the existence check unit 107 checks the existence of the resource use device 30 again.

By contrast, when the existence of the resource use device 30 cannot be confirmed in step S15, i.e., no response has been received from the resource use device 30, the existence check unit 107 notifies the access discard unit 108 of the device ID of the resource use device 30, from which the response has not been received.

The access discard unit 108 generates an access permission discard instruction having the notified device ID recorded therein and transfers the instruction to the communication unit 101. The access permission discard instruction is transmitted to the resource providing device 20 via the communication unit 101 (step S17).

Then, the access discard unit 108 refers to the permission information management table 104 to delete the information on the resource use device 30 having the notified device ID (step S18).

Next, a specific example of transmission of an existence check instruction and an access permission discard instruction performed by the access control device 10 using the permission information management table 104 shown in FIG. 2 will be described.

The access control device 10 checks the existence of the resource use devices 30 having the devices ID recorded in the use side 12 in accordance with the order recorded in the permission information management table 104. For checking the existence of the resource use devices 30 recorded in the permission information management table 104, the access control device 10 also communicates using the communication interface 102 associated with the device ID of each resource use device 30.

This is performed as follows regarding the management information recorded on the first row of FIG. 2. The access control device 10 uses the communication interface eth0 to communicate with a mobile phone E to check the existence of the mobile phone E. When the existence of the mobile phone E cannot be confirmed, the access control device 10 transmits an access permission discard instruction to a mobile phone B as the resource providing device 20 and instructs the mobile phone B to reject an access for reference to confidential reference material from the mobile phone E. The access control device 10 also deletes information (the providing side 12, the communication I/F 13 and the access 14) on the mobile phone E recorded in the use side 12.

Regarding the management information recorded on the second row of FIG. 2, the procedure is as follows. The access control device 10 uses all the communication interfaces to communicate with the mobile phone B to check the existence of the mobile phone B. When the existence of the mobile phone B cannot be confirmed with any of the communication interfaces, the access control device 10 transmits an access permission discard instruction to an installation-type device C as the resource providing device 20 and instructs the installation-type device C to reject an access for video viewing from the mobile phone B. The access control device 10 also deletes information (the providing side 11, the communication I/F 13 and the access 14) on the mobile phone B recorded in the use side 12.

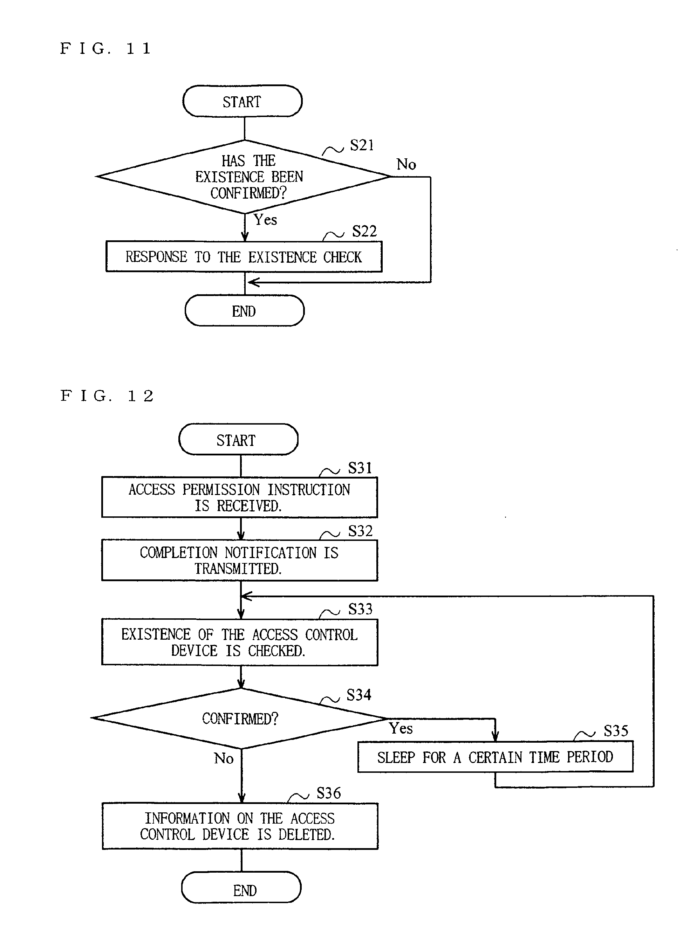

FIG. 11 is a flowchart showing an operation of the existence check response unit 105 of the access control device 10.

The existence check response unit 105 first determines whether or not an existence check instruction transmitted from the resource providing device 20 has been received via the communication unit 101 (step S21). When the existence check instruction has not been received, the existence check response unit 105 terminates the processing.

By contrast, when the existence check instruction has been received, the existence check response unit 105 generates a response to the existence check instruction and transfers the instruction to the communication unit 101. The response is transmitted to the resource providing device 20, which is the source of the existence check instruction, via the communication unit 101 (step S22).

FIG. 12 is a flowchart showing an operation of the resource providing device 20.

First, in the resource providing device 20, the resource access permission unit 205 receives an access permission instruction transmitted from the access control device 10 via the communication unit 201 (step S31), and updates the access management table 204. Specifically, the resource access permission unit 205 refers to the access management table 204 to record the device ID corresponding to the resource use device 30 recorded in the access permission instruction and also record the control information recorded in the access permission instruction, in the access 201.

The resource access permission unit 205 performs setting so as to realize communication with the resource use device 30. When the setting is completed, the resource access permission unit 205 generates a completion notification and transfers the completion notification to the communication unit 201. The completion notification is transmitted to the access control device 10 via the communication unit 201 (step S32).

Next, the existence check unit 206 checks the existence of the access control device 10 (step S33). Specifically, the existence check unit 206 generates an existence check instruction and transfers the instruction to the communication unit 201. The existence check unit 206 determines whether or not the existence of the access control device 10 has been confirmed (step S34). Specifically, the existence check unit 206 determines whether or not a response from the access control device 10 has been received. The communication unit 201 transfers the response transmitted from the access control device 10 to the existence check unit 207.

When the existence of the access control device 10 can be confirmed in step S34, i.e., a response has been received from the access control device 10, the existence check unit 206 sleeps for a certain time period (step S35). After sleeping for the certain time period, the existence check unit 206 checks the existence of the access control device 10 again.

By contrast, when the existence of the access control device 10 cannot be confirmed in step S34, i.e., no response has been received from the access control device 10, the existence check unit 206 notifies the access discard unit 207 of the device ID of the access control device 10, from which the response has not been received.

The access discard unit 207 refers to the access management table 204 to delete all the information regarding the access control device 10 having the notified device ID (step S36) . Thus, the information on the resource use device 30 recorded in association with the access control device 10 is deleted. Therefore, the resource providing device 20 rejects an access from the resource use device 30, the information of which has been deleted from the access management table 204.

Next, a specific example of existence check performed by the resource providing device 20 using the access management table 204 shown in FIG. 3 will be described.

The resource providing device 20 checks the existence of the access control devices 10 having the devices ID recorded in the control side 21 in accordance with the order recorded in the access management table 204.

This is performed as follows regarding the management information recorded on the first row of FIG. 3. The resource providing device 20 checks the existence of a mobile phone H recorded in the control side 21. When the existence of the mobile phone H cannot be confirmed, the resource providing device 20 deletes information (the control side 21, the use side 22 and the access 23) on the mobile phone H recorded in the control side 21. In this case, the device IDs of the mobile phone B and the mobile phone E are deleted from the use side 22. Thus, the mobile phone B cannot access the resource providing device 20 for video viewing, and the mobile phone E cannot access the resource providing device 20 for printing of reference material.

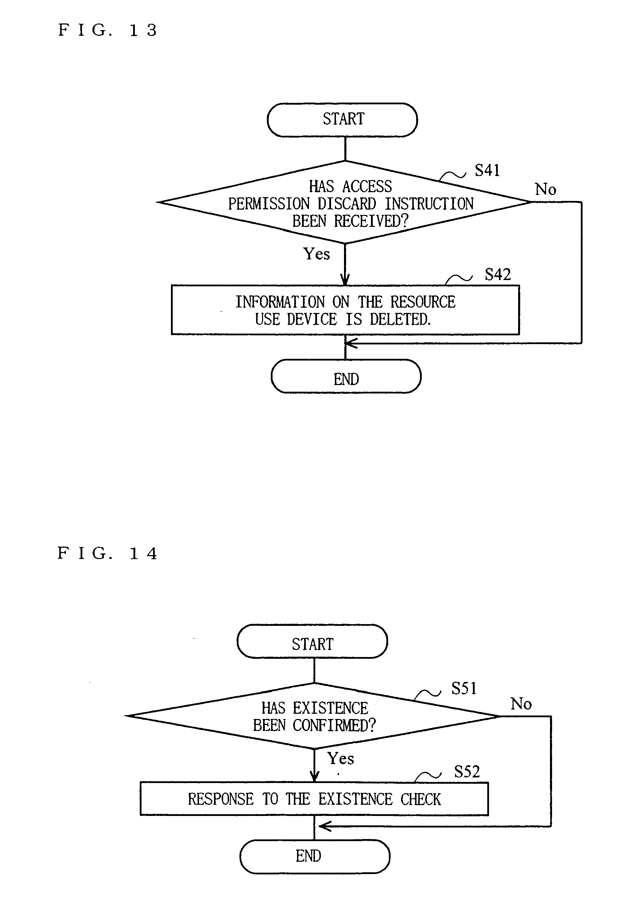

FIG. 13 is a flowchart showing an operation of the access discard unit 207 of the resource providing device 20. First, the access discard unit 207 checks whether or not an access permission discard instruction has been received from the communication unit 201 (step S41). When the access permission discard instruction has not been received, the access discard unit 207 terminates the processing. By contrast, when the access permission discard instruction has been received, the access discard unit 207 refers to the access management table 204 to delete all the information regarding the access control device 10 having the device ID recorded in the access discard instruction (step S42).

FIG. 14 is a flowchart showing an operation of the resource use device 30. First, in the resource use device 30, the existence check response unit 302 determines whether or not an existence check instruction transmitted from the access control device 10 has been received via the communication unit 301 (step S51). When the existence check instruction has not been received, the existence check response unit 302 terminates the processing.

By contrast, when the existence check instruction has been received, the existence check response unit 302 generates a response and transfers the response to the communication unit 301. The response is transmitted to the access control device 10, which is the source of the existence check instruction, via the communication unit 301 (step S52).

As described above, according to this embodiment, the access control device instructs the resource providing device to reject an access from the resource use device, the existence of which cannot be confirmed. In accordance with the instruction from the access control device, the resource providing device rejects subsequent accesses from the resource use device by deleting the information on the resource use device from the management table. Thus, unnecessary access permissions can be quickly discarded, and illegal accesses to the resource providing device using the resource use device can be prevented. Therefore, the confidentiality of the system can be improved.

When communication between the resource providing device and the access control device is disconnected, the access control device cannot transmit an access permission discard instruction to the resource providing device. When this occurs, it is desirable from the viewpoint of security that the resource providing device discards access control on the access use device which is accessing to the resource providing device.

In this case also, according to this embodiment, when the existence of the access control device cannot be confirmed, the resource providing device deletes the information on the access control device, the existence of which cannot be confirmed, and on the resource use device controlled by such an access control device, from the access management table. After this, the resource providing device rejects an access from the resource use device, the information of which has been deleted from the access management table. Thus, even when an access permission discard instruction cannot be transmitted from the access control device, unnecessary access permissions can be quickly discarded and illegal accesses to the resource providing device using the resource use device can be prevented. Therefore, the confidentiality of the system can be further improved.

In this embodiment, the access control device transmits an access permission notification instruction to the resource use device. Depending on the manner of mounting, the resource providing device may generate an access permission notification instruction and transmit the instruction to the resource use device, instead of the access control device. Alternatively, the user may directly input information necessary for accessing the resource providing device to the resource use device. The point is to notify the resource use device that the use of a resource has been permitted.

In this embodiment, the access control device and the resource providing device manage information on a plurality of electronic devices using the permission information management table or the access management table. In the case where there is only one electronic device is the target of control, the devices do not need to have the permission information management table or the access management table.

In this embodiment, control information is recorded in the access permission instruction, the access permission notification instruction and the access permission discard instruction. Depending on conditions, it is not necessary to attach the control information to these instructions. For example, in the case where commands or parameters to be controlled are already determined at the time of designing the system, it is not necessary to attach the control information to the instructions. The data structure shown in FIG. 3 is one example, and it is not necessary that the three instructions each have such a structure. For example, a reference number predetermined between the access control device and the resource providing devicemay be used, such that the contents of an access permission discard instruction is defined only by the reference number. In this case, the resource providing device, which has received an access permission discard instruction having the reference number recorded therein, determines which access permission is to be discarded based on the received reference number.

In this embodiment, monitoring of the resource use device by the access control device, and monitoring of the access control device by the resource providing device, are carried out in parallel. In the case where it is not necessary to perform the monitoring by the access control device and the monitoring by the resource providing device in parallel in parallel, either one of the monitoring by the access control device and the monitoring by the resource providing device may be performed.

In this embodiment, the access control device checks the existence of all the resource use devices recorded in the permission information management table. Alternatively, the access control device may check the existence of only the resource use devices recorded in association with the resource providing devices which need to be controlled in terms of discarding of access permissions, among all the resource providing devices recorded in the permission information management table. With such setting, in the case where it is not necessary to control the discarding of access permissions for all the resource providing devices recorded in the permission information management table, access control processing can be executed efficiently.

In this embodiment, it is assumed that the setting necessary for mutual communication between the access control device and the resource providing device has already been established. In the case where it is necessary to provide setting for establishing communication between the access control device and the resource providing device, information regarding the communication I/F may be recorded in the access management table of the resource providing device.

Use of the UPnP technology allows the devices connected to the communication path to obtain the IP address of the other party at the time of communication. Accordingly, when the device ID included in an instruction is an IP address, an electronic device which has received the instruction can specify the other party. When the device ID is information other than the IP address, for example, a MAC address, a public key, or a Hash function, the electronic device may notify the server (not shown) , holding device IDs and IP addresses in association with each other, of the device ID and request the server to search for the IP address. Alternatively, an electronic device which wishes to search for the IP address corresponding to the device ID may broadcast the device ID to all the electronic devices connected to the communication path, and obtain the IP address when a device having the device ID of interest returns its own IP address.

Hereinafter, specific examples of an operation of the access control system described in the first embodiment will be described. The present invention is not limited to these examples.

### (First Example)

In a first example, a specific example of access control processing will be described. In this example, a server in a company A corresponds to the resource providing device, a mobile phone owned by Mr. Koh of the company A corresponds to the access control device, and a personal computer in a company B corresponds to the resource use device. The server and the mobile phone are connected to each other by IP connection via a mobile phone network and the Internet. The server and the personal computer are connected to each other by IP connection via the Internet. The mobile phone and the personal computer are connected to each other by IP connection via short distance wireless communication.

The server stores important data of Mr. Koh. When visiting Mr. Otsu of the company B, Mr. Koh needs to temporarily display the information stored in the server of the companyA through the personal computer in the company B. For this, Mr. Koh of the company A operates the mobile phone to permit an access from the personal computer to the server. Thus, the personal computer in the company B can access the data stored in the server in the company A.

While the personal computer in the company B is accessing data in the server, the mobile phone checks the existence of the personal computer at a predetermined time interval using the short distance wireless communication. When Mr. Koh finishes the visit to Mr. Otsu and leaves the company B, the distance between the personal computer and the mobile phone increases. The mobile phone instructs the server to delete the information on the personal computer from the access management table 204 when the connection via the short distance wireless communication is disconnected. Thus, after Mr. A leaves the company B, the access permission from the personal computer to the server can be quickly discarded. Therefore, illegal accesses to the server using the personal computer can be prevented, and the confidentiality of the system can be improved.

The access control device and the resource use device may be connected to each other via wireless communication, and the wireless communication range may be limited to a predetermined range. In this case, when the access control device checks the existence of the resource use device, the access control device can simultaneously check whether or not the resource use device exists in the network and whether or not the position of the resource use device is within the predetermined range.

In this example, the mobile phone as the access control device only needs to check the existence of the personal computer as the resource use device. With no need for the server as the resource providing device to check the existence of the mobile phone, an access from the resource use device (personal computer) , the access permission given to which should be discarded, can be quickly discarded.

### (Second Example)

Next, a specific example of access control processing and resource access control processing will be described. In this example, a server in a company A corresponds to the resource providing device, a mobile phone owned by Mr. Koh of the company A corresponds to the access control device, and a mobile terminal owned by Mr. Otsu of the company B corresponds to the resource use device. In this example, the mobile phone and the server are connected to each other by IP connection via short distance wireless communication. The mobile phone and the mobile terminal are also connected to each other by IP connection via short distance wireless communication. The server and the mobile terminal are connected to each other by IP connection via the Internet. The server checks the existence of the mobile phone using the short distance wireless communication, and the communication range is roughly of a size covering one room.

When Mr. Otsu of the company B visits Mr. Koh of the company A, Mr. Koh operates the mobile phone to permit an access from the mobile terminal owned by Mr. Otsu to the server. The server checks whether or not the mobile phone owned by Mr. Koh exists in its own communication range at a predetermined time interval. For example, if Mr. Koh leaves the room and the server cannot confirm the existence of the mobile phone owned by Mr. Koh, the server deletes the information on the mobile phone from the access management table 204. At this time, the information on the mobile terminal owned by Mr. Otsu is also deleted from the access management table 204. Therefore, the server rejects an access from the mobile terminal. Thus, illegal accesses using the mobile terminal can be prevented.

When Mr. Otsu finishes his visit and leaves the company A, the mobile phone owned by Mr. Koh cannot confirm the existence of the mobile terminal owned by Mr. Otsu. Therefore, the mobile phone instructs the server to delete the information on the mobile terminal. The mobile phone also deletes the information on the mobile terminal from the permission information management table 104 of its own.

As described above, according to this example, the access control device monitors whether or not the resource use device exists in the communication range, and the resource providing device monitors whether or not the access control device exists in the communication range. By limiting the communication range to a short distance to check the existence of the resource use device or the access control device, the resource providing device 20 can be used only when the resource use device 30 and the access control device 10 are located within a predetermined range.

### INDUSTRIAL APPLICABILITY

The present invention relates to access control of electronic devices, and is useful, for example, as an access control device for quickly discarding an access from a resource use device and thus preventing illegal use of a resource providing device, a resource providing device for accepting an access from the resource use device in accordance with a request from the access control device, and an access control system using these devices.

## Claims

1. An access control device for controlling an access from a resource use device to a resource providing device for using a resource provided by the resource providing device; the access control device comprising:
a communication unit for communicating with the resource use device and the resource providing device;
an access permission unit for instructing the resource providing device via the communication unit to permit an access from the resource use device;
a storage unit for storing information on the resource use device which has been permitted to access by the access permission unit as management information;
an existence check unit for checking a communication state with the resource use device, the management information of which is stored in the storage unit, via the communication unit; and
an access discard unit for instructing the resource providing device via the communication unit to reject an access from the resource use device, communication with which is determined to be disconnected by the existence check unit.

2. An access control device according to claim 1, wherein the access discard unit deletes the information on the resource use device, communication with which is determined to be disconnected, from the storage unit.

3. An access control device according to claim 1, wherein the information on the resource use device is information for identifying the resource use device.

4. An access control device according to claim 1, wherein the information on the resource use device includes information for identifying the resource use device and information for identifying the resource providing device for accepting an access from the resource use device.

5. An access control device according to claim 3 or 4,
wherein the information on the resource use device includes information on a command issued by the resource use device when accessing the resource providing device.

6. An access control device according to claim 1, wherein the access permission unit notifies the resource providing device of the information on the resource use device to be permitted to access, via the communication unit.

7. An access control device according to claim 1, wherein the access discard unit notifies the resource providing device of the information on the resource use device, communication with which is determined to be disconnected, via the communication unit.

8. An access control device according to claim 1, further comprising an existence check response unit for responding to the resource providing device via the communication unit when receiving a communication state check request from the resource providing device via the communication unit.

9. An access control device according to claim 1, wherein:
the communication unit communicates with the resource use device via wireless communication; and
a communication range by the wireless communication is limited to a predetermined range.

10. A resource providing device for accepting an access from a resource use device permitted to access by an access control device and providing a resource, the resource providing device comprising:
a communication unit for communicating with the access control device and the resource use device;
a storage unit for storing information on the resource use device intended by an instruction given by the access control device via the communication unit as management information;
an access permission unit for permitting an access from the resource use device, the management information of which is stored in the storage unit;
an existence check unit for checking a communication state with the access control device via the communication unit; and
an access rejection unit for rejecting an access from the resource use device permitted to access by the access control device, communication with which is determined to be disconnected by the existence check unit.

11. A resource providing device according to claim 10, wherein the access rejecting unit deletes the information on the resource use device permitted to access by the access control device, communication with which is determined to be disconnected, from the storage unit.

12. A resource providing device according to claim 10, wherein the information on the resource use device is information for identifying the resource use device.

13. A resource providing device according to claim 10, wherein the information on the resource use device includes information for identifying the resource use device and information for identifying the access control device which has permitted the resource use device to access.

14. A resource providing device according to claim 12 or 13, wherein the information on the resource use device includes information on a command issued by the resource use device when accessing the resource providing device.

15. A resource providing device according to claim 10, wherein when instructed by the access control device via the communication unit to reject an access from the resource use device, the access rejecting unit rejects an access from the resource use device intended by the instruction.

16. A resource providing device according to claim 15, wherein the access rejecting unit deletes the information on the resource use device intended by the instruction from the storage unit.

17. A resource providing device according to claim 10, wherein:
the communication unit communicates with the access control device via wireless communication; and
a communication range by the wireless communication is limited to a predetermined range.

18. An access control system comprising:
a resource providing device for providing a resource;
a resource use device for accessing the resource; and
an access control device for controlling an access by the resource use device;
wherein:
the access control device includes:
a communication unit for communicating with the resource use device and the resource providing device;
an access permission unit for instructing the resource providing device via the communication unit to permit an access from the resource use device;
a storage unit for storing information on the resource use device permitted to access by the access permission unit as management information;
an existence check unit for checking a communication state with the resource use device, the management information of which is stored in the storage unit, via the communication unit; and
an access discard unit for instructing the resource providing device via the communication unit to reject an access from the resource use device, communication with which is determined to be disconnected by the existence check unit; and
the resource providing device includes:
a resource providing communication unit for communicating with the access control device and the resource use device;
a resource providing storing unit for storing information on the resource use device intended by the instruction given by the access control device via the resource providing communication unit as management information;
a resource access permission unit for permitting an access from the resource use device, the management information of which is stored in the resource providing storage unit;
a resource providing existence check unit for checking a communication state with the access control device via the resource providing communication unit; and
an access rejectionunit for rejecting an access from the resource use device permitted to access by the access control device, communication with which is determined to be disconnected by the resource providing existence check unit, and an access from the resource use device intended by the instruction given by the access control device via the resource providing communication unit.
